(19) Europäisches Patentamt
European Patent Office
Office européen des brevets

(11) **EP 3 536 472 B1**

(12) **EUROPEAN PATENT SPECIFICATION**

(45) Date of publication and mention
of the grant of the patent:
**26.01.2022 Bulletin 2022/04**

(21) Application number: **17867149.1**

(22) Date of filing: **17.10.2017**

(51) International Patent Classification (IPC):
*B29B 15/14* (2006.01)   *B29B 9/14* (2006.01)
*C08J 3/12* (2006.01)   *C08J 5/06* (2006.01)
*B29B 15/12* (2006.01)   *B29C 45/00* (2006.01)

(52) Cooperative Patent Classification (CPC):
**B29C 45/0005; B29B 9/14; B29B 15/122;**
**C08J 3/12; C08J 5/06;** C08J 2300/12;
C08J 2369/00

(86) International application number:
**PCT/JP2017/037589**

(87) International publication number:
**WO 2018/083978 (11.05.2018 Gazette 2018/19)**

(54) **ASSEMBLY OF MOLDING MATERIALS, AND METHOD FOR PRODUCING ASSEMBLY OF MOLDING MATERIALS**

ANORDNUNG AUS FORMMASSEN UND VERFAHREN ZUR HERSTELLUNG EINER ANORDNUNG VON FORMMASSEN

ENSEMBLE DE MATÉRIAUX DE MOULAGE, ET PROCÉDÉ DE PRODUCTION D'UN ENSEMBLE DE MATÉRIAUX DE MOULAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2016   JP 2016214221**

(43) Date of publication of application:
**11.09.2019 Bulletin 2019/37**

(73) Proprietor: **Teijin Limited
Osaka-shi, Osaka 530-0005 (JP)**

(72) Inventors:
• **KOBAYASHI, Daisuke
Osaka 530-0005 (JP)**

• **HUA, Guofei
Osaka 530-0005 (JP)**

(74) Representative: **Carpmaels & Ransford LLP
One Southampton Row
London WC1B 5HA (GB)**

(56) References cited:
EP-A1- 2 725 055      EP-B1- 1 105 277
WO-A1-2013/137246   JP-A- 2000 516 162
JP-A- 2006 182 915    JP-A- 2012 056 232
JP-A- 2013 011 050    JP-A- 2014 159 560
US-A1- 2014 106 166

EP 3 536 472 B1

## Description

Technical Field

The present invention relates to an assembly of the molding materials, and a method for producing the assembly of the molding materials.

Background Art

As means for obtaining a resin material having high strength and reduced brittle fracture, it is known that a resin is made into a composite material reinforced with a carbon fiber. Particularly, the composite material obtained by reinforcing a thermoplastic resin as a matrix resin with a carbon fiber is excellent in easy processability and recyclability as a molding material, and is expected to be applied to various fields.

For example, Patent Literature 1 proposes a molding material in which a carbon fiber bundle having an impregnation aid attached thereto is covered with a polycarbonate resin and the covered body is cut into pellets, making carbon fibers being easily dispersed during melt-kneading of injection molding. Patent Literature 2 proposes a molding material in which a carbon fiber bundle having a phenolic resin attached thereto is covered with a polycarbonate resin. Patent Literature 3 relates to a composite rod for use in various applications. Patent Literature 4 relates to a process for the continuous preparation of a coated, long fiber reinforcing composite structure suitable for the preparation of shaped articles. Patent Literature 5 relates to a molding material comprising a composite of 1 to 50 wt% of a continuous reinforcing fiber bundle (A) and 0.1 to 20 wt% of a poly (phenylene ether ether ketone) oligomer (B); and 30 to 98.9 wt% of a thermoplastic resin (C) adhering to the composite, wherein the component (B) has a melting point of not higher than 270°C. Patent Literature 6 aims to provide a composite reinforced fiber bundle favorable in impregnating ability into a reinforced fiber bundle, reduced in void, and reduced in volatile component when molding, and a molding material using the composite reinforced fiber bundle capable of manufacturing a molded product favorable in fiber dispersion into the molded product. Patent Literature 7 relates to a molded product of a carbon fiber reinforced polycarbonate, having excellent physical properties and surface appearance; a method for producing the molded product by a simple process which is not accompanied with an increase in manufacturing cost; and a molding material which enables the method. Patent Literature 8 relates to a fibre-reinforced thermoplastic resin moulding material which includes: a thermoplastic resin [A]; resin-impregnated reinforcing fibre bundles [E] obtained by impregnating reinforcing fibres [B] with a resin [D] having a lower melt viscosity at 200°C than the thermoplastic resin [A]; and a reinforcing-fibre modifying component [C] which has a lower melt viscosity at 200°C than the thermoplastic resin [A], and which has a difference in SP value with respect to the thermoplastic resin [A] of at least 1.0. Patent Literature 9 relates to a molding material which is easy to produce and allows a reinforcing fiber bundle to be well dispersed in the molded product obtained by injection molding, etc., a production process thereof, a polyamide based resin composition with good flowability, and molded products obtained from them.

Citation List

Patent Literature

Patent Literature 1: WO 2013/137246
Patent Literature 2: JP-A-2014-159560
Patent Literature 3: US2014106166 A1
Patent Literature 4: EP1105277 A1
Patent Literature 5: EP2725055 A1
Patent Literature 6: JP2012056232 A
Patent Literature 7: WO2013137246 A1
Patent Literature 8: WO2016021479 A1
Patent Literature 9: US2002019182 A1

Summary of Invention

Technical Problem

However, in the molding materials described in Patent Literature 1 and Patent Literature 2, when the carbon fiber bundle covered with a resin is cut, the carbon fibers fall out (fall off), causing a decrease in productivity. Thus, a molding material having higher productivity and excellent handleability is required.

Accordingly, objects of the present invention are to provide an assembly of molding material which solves the problems of the related-art molding material, prevents falling off of carbon fibers from the molding material and has improved productivity and handleability, and to provide a method for producing the assembly of the molding materials.

Solution to Problem

In order to solve the above problems, the present invention provides the assembly of molding materials and method for producing an assembly of molding materials according to the independent claims. Further embodiments of the invention are described in the dependent claims.

Advantageous Effects of Invention

When the assembly of the molding materials according to the present invention is used, it is possible to prevent the carbon fibers from falling off from the molding material during injection molding and to produce a molded body with high production efficiency. In addition, when the assembly of the molding materials according to the present invention is used, troubles in molding such as clogging in a hopper dryer of a molding machine during injection molding are reduced and the handleability is excellent.

Brief Description of Drawings

Fig. 1 shows an example of a molding material according to the present invention.
Fig. 2 shows an example in which carbon fibers are fallen off from the molding material.
Fig. 3 shows a cross sectional view (a YZ cross section in Fig. 1) of the molding material according to the present invention.
Fig. 4 shows an example of a cross section (a YZ cross section in Fig. 2) of the molding material in which carbon fibers fall off from the molding material.

Description of Embodiments

[Carbon Fibers]

The carbon fibers contained in the molding material used in the present invention may be any carbon fibers such as polyacrylonitrile (PAN)-based carbon fibers, petroleum/petroleum pitch-based carbon fibers, rayon-based carbon fibers, and lignin-based carbon fibers. Particularly, PAN-based carbon fibers using PAN as a raw material are preferred because of having excellent productivity and mechanical properties on a factory scale.

Carbon fibers containing carbon single fibers having an average diameter of 5 $\mu$m to 10 $\mu$m can be preferably used as the carbon fibers. General carbon fibers are carbon fiber filaments in which 1000 to 50,000 single fibers (single yarns) form a fiber bundle. The carbon fiber bundle in the present invention also contains such general carbon fiber filaments, and also contains doubled yarn obtained by further doubling and winding the carbon fiber filaments, and twisted yarns obtained by twisting the doubled yarns. In order to enhance the adhesion between the carbon fibers and the polycarbonate, the carbon fibers contained in the molding material used in the present invention preferably have an oxygen-containing functional group introduced onto the surface thereof by surface treatment.

As described above, in order to stabilize a step of uniformly adhering an impregnation aid to a carbon fiber bundle in a case of making an easily impregnated carbon fiber bundle by soaking the carbon fiber bundle with the impregnation aid, the carbon fiber bundle is preferably treated with a sizing agent for providing convergence. Known sizing agents for producing carbon fiber filaments can be used as the sizing agent. The carbon fiber bundle can be used in the present invention without problems even when an oil agent used for improving the slidability during production remains. Hereinafter, in the sense of a superordinate concept including an impregnation aid and other surface treatment agents such as the above sizing agent, an expression of "surface treatment agent" may be used.

[Impregnation Aid]

The impregnation aid used in the present invention is not particularly limited, and may be one type or plural types of impregnation aids.

The impregnation aid used in the present invention is preferably one or more selected from the group consisting of a phosphate ester and an aliphatic hydroxycarboxylic acid-based polyester, and, of course, may contain both a phosphate ester and an aliphatic hydroxycarboxylic acid-based polyester. The impregnation aid may be a crystalline resin or an amorphous resin.

In the present invention, the phosphate ester is not particularly limited in a case where the phosphate ester is used as the impregnation aid, and examples thereof include a blend of phosphate ester monomers or oligomeric phosphates, specifically aromatic phosphates typified by trimethyl phosphate, triethyl phosphate, tributyl phosphate, trioctyl phosphate, tributoxyethyl phosphate, triphenyl phosphate, and the like. Preferred is trimethyl phosphate or triphenyl phosphate.

In the present invention, in a case where the aliphatic hydroxycarboxylic acid-based polyester is used as the impregnation aid, the aliphatic hydroxycarboxylic acid-based polyester is a polyester containing aliphatic hydroxycarboxylic acid residues, and may be a homopolymerized polyester containing a single aliphatic hydroxycarboxylic acid residue or a copolymerized polyester containing plural kinds of aliphatic hydroxycarboxylic acid residues. In addition, the aliphatic hydroxycarboxylic acid-based polyester may be a copolymerized polyester containing residues other than an aliphatic hydroxycarboxylic acid residue, such as a diol residue and a dicarboxylic acid residue, in an amount of less than 50 mol% of the residues constituting the polymer, and is preferably a homopolymer to which a comonomer component is not intentionally added from the viewpoint of easy availability. The aliphatic hydroxycarboxylic acid-based polyester also contains a lactone-based polymer which is a compound generated by dehydration condensation of a hydroxyl group and a carboxyl group in the same molecule.

In the present invention, the aliphatic hydroxycarboxylic acid-based polyester usable as the impregnation aid is not particularly limited. The aliphatic hydroxycarboxylic acid-based polyester is preferably a homopolymer of $\varepsilon$-caprolactone, $\delta$-caprolactone, $\beta$-propiolactone, $\gamma$-butyrolactone, $\delta$-valerolactone, $\gamma$-valerolactone and enantolactone, and copolymers of these two or more monomers, and is more preferably one or more selected from the group consisting of a homopolymer of $\varepsilon$-caprolactone, $\delta$-caprolactone, $\beta$-propiolactone, $\gamma$-butyrolactone, $\delta$-valerolactone, $\gamma$-valerolactone and enantolactone, having a weight average molecular weight of 3,000 to 50,000, and copolymers of these two or more monomers having a weight average molecular weight of 3,000 to 50,000. Particularly preferred is a homopolymer of $\varepsilon$-caprolactone or $\delta$-caprolactone, having a weight average molecular weight of 3,000 to 50,000. When referring to the lactone-based polymer in the present invention, a polymer obtained by ring-opening polymerization of lactones and a polymer having the same structure using an aliphatic hydroxycarboxylic acid, which is an equivalent of the lactone, and a derivative thereof as a raw material are also included.

The amount of the impregnation aid contained in the carbon fiber bundle is not particularly limited, and is preferably 3 parts by mass to 15 parts by mass, and more preferably 5 parts by mass to 12 parts by mass, based on 100 parts by mass of the carbon fibers.

[Thermoplastic Resin]

Examples of the thermoplastic resin used in the present invention can include a polyolefin resin, a polystyrene resin, a thermoplastic polyamide resin, a polyester resin, a polyacetal resin (polyoxymethylene resin), a polycarbonate resin, a (meth)acrylic resin, a polyarylate resin, a polyphenylene ether resin, a polyimide resin, a polyether nitrile resin, a phenoxy resin, a polyphenylene sulfide resin, a polysulfone resin, a polyketone resin, a polyether ketone resin, a thermoplastic urethane resin, a fluorine resin, a thermoplastic polybenzimidazole resin, a vinyl resin, or the like.

Examples of the polyolefin resin can include a polyethylene resin, a polypropylene resin, a polybutadiene resin, a polymethylpentene resin, or the like. Examples of the vinyl resin can include a vinyl chloride resin, a vinylidene chloride resin, a vinyl acetate resin, a polyvinyl alcohol resin, or the like. Examples of the polystyrene resin can include a polystyrene resin, an acrylonitrile-styrene resin (an AS resin), an acrylonitrile-butadienestyrene resin (an ABS resin), or the like. Examples of the polyamide resin can include a polyamide 6 resin (nylon 6), a polyamide 11 resin (nylon 11), a polyamide 12 resin (nylon 12), a polyamide 46 resin (nylon 46), a polyamide 66 resin (nylon 66), a polyamide 610 resin (nylon 610), or the like. Examples of the polyester resin can include a polyethylene terephthalate resin, a polyethylene naphthalate resin, a polybutylene terephthalate resin, a polytrimethylene terephthalate resin, a liquid crystal polyester, or the like. Examples of the (meth)acrylic resin can include polymethyl methacrylate or the like. Examples of the polyphenylene ether resin can include modified polyphenylene ether or the like. Examples of the polyimide resin can include a thermoplastic polyimide, a polyamide imide resin, a polyether imide resin, or the like. Examples of the polysulfone resin can include a modified polysulfone resin, a polyethersulfone resin, or the like. Examples of the polyetherketone resin can include a polyetherketone resin, a polyetheretherketone resin, a polyetherketoneketone resin, or the like. Examples of the fluorine resin can include polytetrafluoroethylene.

The thermoplastic resin used in the present invention may be of only one type, or may be of two or more types. In the present invention, examples of a mode in which two or more types of thermoplastic resin are used in combination can include a mode in which thermoplastic resins having different softening points or melting points are used in combination or a mode in which thermoplastic resins having different average molecular weights are used in combination, and are not limited thereto.

[Amorphous Resin]

The thermoplastic resin in the present invention is preferably a resin containing an amorphous resin. As to be described later, in a case where the molding material has a core-sheath structure in which the carbon fiber bundle is covered with the thermoplastic resin, the carbon fiber bundle is covered with the thermoplastic resin in a molten state and then the covered body is cooled, so as to produce a molding material. In cooling, a cooling difference occurs between an outer peripheral side and an inner peripheral side of the thermoplastic resin, and shrinkage of the thermoplastic resin occurs. The covered body is cooled from the outside of the thermoplastic resin and the thermoplastic resin shrinks toward the outside. As a result, in a case where the molding material has a core-sheath structure, gaps tend to be formed in a core portion (portion of the carbon fiber bundle) in the center. When a resin containing an amorphous resin is used as the thermoplastic resin, the shrinkage ratio is lower than that of a crystalline resin, and the shrinkage of thermoplastic resin as a sheath component is small, so that the generation of the gaps in the core portion of the molding material can be suppressed.

[Linear Expansion Coefficients of Thermoplastic Resin and Impregnation Aid]

The assembly of molding materials according to the present invention preferably satisfies the following Formula (2):

$$0.1 < |K_1 - K_2| \qquad (2)$$

where, $K_1$ ($10^{-4}/°C$) represents the linear expansion coefficient of the thermoplastic resin, and $K_2$ ($10^{-4}/°C$) represents the linear expansion coefficient of the impregnation aid.

Since a molding material satisfying the Formula (2) has a difference in linear expansion coefficient between the impregnation aid and the thermoplastic resin present around the impregnation aid, the carbon fibers are easy to fall out. However, the molding material used in the present invention satisfies the Formula (2), and the carbon fibers are difficult to fall out.

[Solubility Parameter (SP) Value of Thermoplastic Resin]

The assembly of molding materials according to the present invention preferably satisfies the following Formula (3):

$$|S_1 - S_2| < 1.5 \qquad (3)$$

where, $S_1$ (($cal/cm^3)^{1/2}$) represents the solubility parameter (SP) value of the thermoplastic resin, and $S_2$ (($cal/cm^3)^{1/2}$) represents the SP value of the impregnation aid.

When the Formula (3) is satisfied, in covering the carbon fiber bundle containing the impregnation aid with the thermoplastic resin, a part of the impregnation aid and the thermoplastic resin are easily mixed, making the carbon fiber bundle less likely to fall out from the molding material.

[Polycarbonate]

A resin containing polycarbonate is preferably used as the thermoplastic resin in the present invention. In this case, the type of the polycarbonate is not particularly limited, and examples thereof include those obtained by reacting various dihydroxyaryl compounds with phosgene or those obtained by a transesterification reaction between a dihydroxyaryl compound and diphenyl carbonate. Representative examples are polycarbonates obtained by the reaction of 2,2'-bis(4-hydroxyphenyl) propane, so-called bisphenol A, with phosgene or diphenyl carbonate.

Examples of the dihydroxyaryl compound used as a raw material of the polycarbonate include bis(4-hydroxyphenyl) methane, 1,1'-bis(4-hydroxyphenyl) ethane, 2,2'-bis(4-hydroxyphenyl) propane, 2,2'-bis(4-hydroxyphenyl) butane, 2,2'-bis(4-hydroxyphenyl) octane, 2,2'-bis(4-hydroxy-3-methylphenyl) propane, 2,2'-bis(4-hydroxy-3-t-butylphenyl) propane, 2,2'-bis(3,5-dimethyl-4-hydroxyphenyl) propane, 2,2'-bis(4-hydroxy-3-cyclohexylphenyl) propane, 2,2'-bis(4-hydroxy-3-methoxyphenyl) propane, 1,1'-bis(4-hydroxyphenyl) cyclopentane, 1,1'-bis(4-hydroxyphenyl) cyclohexane, 1,1'-bis(4-hydroxyphenyl) cyclododecane, 4,4'-dihydroxyphenyl ether, 4,4'-dihydroxy-3,3'-dimethylphenyl ether, 4,4'-dihydroxydiphenyl sulfide, 4,4'-dihydroxy-3,3'-dimethyl diphenyl sulfide, 4,4'-dihydroxydiphenyl sulfoxide, 4,4'-dihydroxydiphenyl sulfone, bis(4-hydroxyphenyl) ketone, or the like. These dihydroxyaryl compounds can be used alone or in combination of two or more types.

Preferred dihydroxyaryl compounds contain bisphenols, bis(hydroxyphenyl) alkanes such as 2,2'-bis(4-hydroxyphenyl) propane, bis(hydroxyphenyl) cycloalkanes such as bis(4-hydroxyphenyl) cyclohexane, dihydroxydiphenyl sulfide, dihydroxydiphenyl sulfone, and dihydroxydiphenyl ketone which form aromatic polycarbonates with high heat resistance. Particularly preferred dihydroxyaryl compounds contain 2,2'-bis(4-hydroxyphenyl) propane forming bisphenol A type aromatic polycarbonates.

When producing a bisphenol A aromatic polycarbonate, a part of bisphenol A may be substituted with another dihydroxyaryl compound within a range not impairing heat resistance, mechanical strength and the like. In addition, for the purpose of increasing flowability, appearance gloss, flame retardancy, thermal stability, weather resistance, impact resistance or the like, various polymers, fillers, stabilizers, pigments or the like may be blended within a range not impairing mechanical strength. For the purpose of improving flame retardancy, it is also possible to incorporate a phosphate ester as a flame retardant into the polycarbonate.

[Molding Material]

The molding material used in the present invention is one in which the carbon fiber bundle containing an impregnation aid is covered with a thermoplastic resin, and is usually in the form of a granule. The molding material used in the invention has a core-sheath structure in which the carbon fiber bundle is covered with a thermoplastic resin, and an axial length of the carbon fiber bundle is preferably substantially the same as the length of the molding material. At this time, the carbon fiber bundle is the core and the thermoplastic resin is the sheath. The molding material used in the invention has a core-sheath structure in which the carbon fiber bundle is covered with a thermoplastic resin, and an axial length of the carbon fiber bundle is preferably the same as the length of the molding material, and allows an error normally occurring when the covered body is cut with a cutter or the like. More specifically, the axial length of the carbon fiber bundle is preferably less than 5% with respect to the length of the molding material.

That is, the molding material is preferably a pellet having a core-sheath structure including the carbon fiber bundle as a core component and the thermoplastic resin as a sheath component, obtained by cutting a covered body in which the carbon fiber bundle is covered with the thermoplastic resin with a cutter (hereinafter, sometimes referred to as core-sheath pellets).

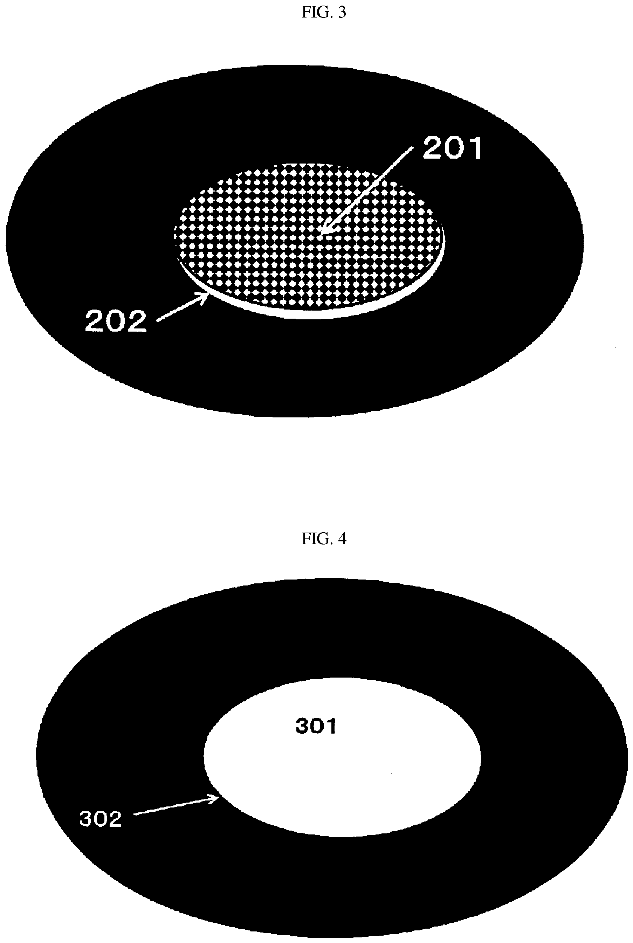

In such a granular molding material, the axial length of the carbon fiber bundle is preferably 1 mm to 30 mm, more preferably 2 mm to 10 mm, and even more preferably 2 mm to 5 mm. The diameter of the core-sheath pellets (for example, core-sheath pellets described in Fig. 3) is not particularly limited, and is preferably 1/10 or more and 2 times or less of the pellet length, and more preferably 1/4 or more of the pellet length and equal to or less than the pellet length. The axial direction of the carbon fiber bundle is the longitudinal direction of the carbon single fiber in the carbon fiber bundle.

[Impregnation State of Core-sheath Structure and Impregnation Aid]

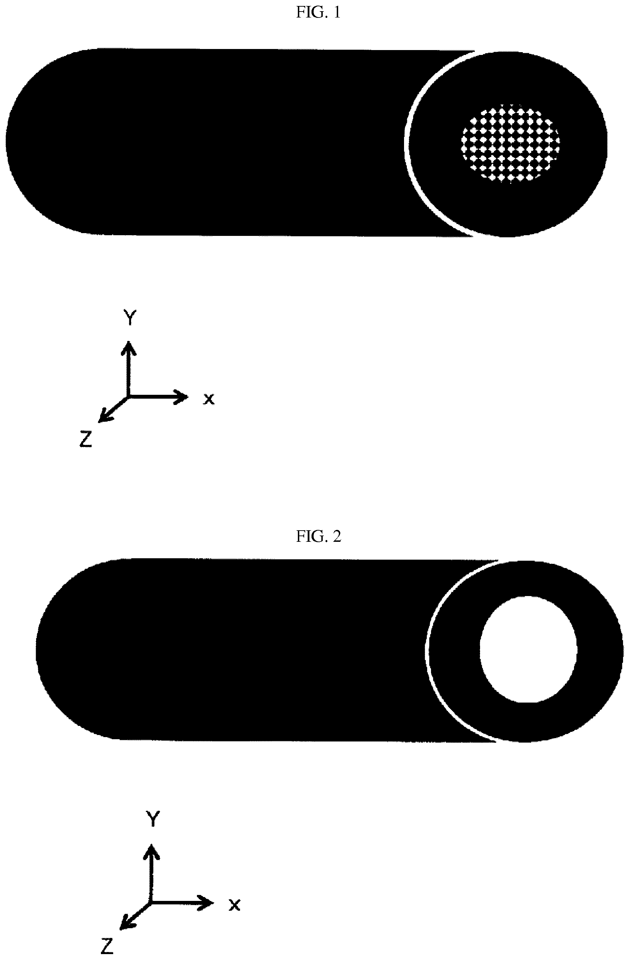

In the present invention, the carbon fiber bundle is preferably not impregnated with the thermoplastic resin. Here, the expression " the carbon fiber bundle is not impregnated with thermoplastic resin" means that the impregnation thickness of the thermoplastic resin in the direction toward the inside of the carbon fiber bundle is 50 $\mu$m or less when the molding material having a core-sheath structure in which the carbon fiber bundle is covered with the thermoplastic resin is cut in an axial center direction and is observed. The axial center direction refers to a direction toward the center of the axis (direction orthogonal to the axial direction of the carbon fiber bundle contained in the molding material), and the Z axis direction in Fig. 1 is the axial center direction.

When the carbon fiber bundle is impregnated with the thermoplastic resin of the molding material, the carbon fibers are difficult to fall out, but the production cost of the molding material is increased. The molding material used in the present invention is a molding material excellent in the viewpoint of production cost since it is difficult for the carbon fibers to fall out despite the fact that the carbon fiber bundle is not impregnated with the thermoplastic resin.

[Assembly of Molding Materials]

The assembly of molding materials according to the present invention is an assembly of the above (granular) molding materials, and 30% or more of the molding materials in the assembly satisfy 100 $\leq$ F/L (N/m), in which L represents the length of the molding material in the axial direction of the carbon fiber bundle and F represents the grip force of the carbon fiber bundle to the molding material.

100 $\leq$ F/L (N/m) means that the carbon fibers are difficult to fall off from the molding material. The granular molding material forming the assembly of molding materials according to the present invention has, for example, a cylindrical shape as shown in Fig. 1. In a case where the carbon fibers in the carbon fiber bundle fall off from the molding material, it becomes a molding material of only the thermoplastic resin component, for example, as shown in Figs. 2 and 4.

When the value of F/L is less than 80 (N/m), the carbon fibers are easy to fall off from the molding material. That is, when the value of F/L is less than 80 (N/m), troubles may occur not only in the steps of producing the molding material but also in the molding site using the molding material, such as falling off of the carbon fibers from the molding material when the molding material is dry-blended or pneumatically conveyed, and clogging in a hopper dryer of an injection molding machine.

Preferably 40% or more, more preferably 50% or more, and still more preferably 60% or more of the molding materials in the whole assembly satisfy 100 ≤ F/L (N/m). When the above percentage is less than 30%, the amount of the carbon fiber falling off from the molding material during dry blending or in pneumatic conveying the assembly of molding materials is large, and the productivity of the molded body is lowered.

From the viewpoint of poor dispersion of the carbon fibers in injection molding, F/L is 10,000 (N/m) or less.

In the core-sheath structure in which the carbon fiber bundle is covered with the thermoplastic resin, the grip force F of the carbon fiber bundle to the molding material can be measured as follows. That is, 100 molding materials were randomly taken out from the assembly of molding materials. Using a force gauge (manufactured by Imada) equipped with a pin having φ0.8 mm at the tip thereof, the pin is pushed into the carbon fiber bundle of the core portion of the molding material, and the maximum load is measured when the carbon fibers fall off. Here, since the measurement cannot be performed when the carbon fiber bundle has already fallen off from the molding material taken out, the grip force to this molding material was set to 0 (N).

As is clear from the above measurement method, the grip force of the carbon fiber bundle to the molding material indicates the force with which the carbon fiber bundle is gripped in the molding material.

The molding material used in the present invention is preferably a molding material in which a carbon fiber bundle containing an impregnation aid is covered with a thermoplastic resin, and which satisfies 80 ≤ F/L (N/m) when the length of the molding material in the axial direction of the carbon fiber bundle is L and the grip force of the carbon fiber bundle to the molding material is F. Here, the F/L of the molding material is the average value of F/L of 100 molding materials. The molding material used in the present invention preferably has F/L (N/m) of 80 or more, more preferably 90 or more, still more preferably 150 or more, particularly preferably 200 or more, and most preferably 250 or more. In addition, the molding material used in the present invention preferably has F/L (N/m) of less than 100,000 (N/m), and more preferably 10,000 (N/m) or less.

In the case of a core-sheath structure in which the carbon fiber bundle is covered with the thermoplastic resin, the grip force F of the carbon fiber bundle to the molding material is measured as the average value of 100 randomly taken molding materials by the above measurement method.

[Observation of Cross Section in Axial Center Direction]

In the assembly of molding materials according to the present invention, the molding material, which has a core-sheath structure in which the carbon fiber bundle is covered with the thermoplastic resin, preferably satisfies the following Formula (1) when the molding material is cut in the axial center direction and observed.

$$0.4 \leq (\text{area of carbon single fiber}) \times (\text{number of single fibers in carbon fiber bundle}) /$$

$$(\text{area surrounded by inner periphery of thermoplastic resin}) \leq 0.9 \qquad (1)$$

Here, the area surrounded by the inner periphery of the thermoplastic resin is an average value of the molding materials in the assembly.

The expression "(area of carbon single fiber) × (number of single fibers in carbon fiber bundle)" indicates only the area of the carbon fibers at the core portion when the molding material is cut in the axial center direction and is observed.

The area surrounded by the inner periphery of the thermoplastic resin is, for example, 202 shown in Fig. 3. In a case where the carbon fiber bundle (201) falls off from the molding material, the area surrounded by the inner periphery of the thermoplastic resin indicated by 302 in Fig. 4 may be measured since 301 in Fig. 4 is a cavity.

When the value of (area of carbon single fiber) × (number of single fibers in carbon fiber bundle) / (area surrounded by inner periphery of thermoplastic resin) is less than 0.4, the carbon fibers are easy to fall off from the molding material. Thus, in the molding material used in the invention the value is 0.4 or more. More preferred range is 0.5 or more. From the viewpoint of poor dispersion of the carbon fibers in injection molding, (area of carbon single fiber) × (number of single fibers in carbon fiber bundle) / (area surrounded by inner periphery of thermoplastic resin) is preferably 0.9 or less.

[Phase State of Impregnation Aid]

The impregnation aid in the present invention is preferably a solid substance at 20°C. Before producing the molding material used in the present invention, a carbon fiber bundle containing an impregnation aid may be prepared in advance. This is because the carbon fiber bundle containing the impregnation aid is stored, for example, in a state wound around a paper pipe or the like, and it is easy to unwind the fiber bundle when the impregnation aid is a solid substance at room temperature.

In the molding material used in the present invention, a ratio $D_1/D_2$ of the long diameter $D_1$ to the short diameter $D_2$ of the shape of the cross section obtained by cutting the molding material along the direction orthogonal to the axial direction of the carbon fiber bundle is preferably 1.1 to 1.8. The upper limit of $D_1/D_2$ is preferably 1.6 or less, more preferably 1.5 or less, and still more preferably 1.4 or less. The lower limit of $D_1/D_2$ is preferably 1.2 or more. The shape of the cross section obtained by cutting the molding material along the direction orthogonal to the axial direction of the carbon fiber bundle is preferably an ellipse or a circle.

When $D_1/D_2$ is small, the carbon fiber bundle tends to fall off from the molding material. This is because the carbon fiber bundle can be crushed with the thermoplastic resin and thus the carbon fiber bundle is difficult to fall off in the case of a flat-shaped molding material having large $D_1/D_2$. In the present invention, even with a molding material having $D_1/D_2$ within the above range, the carbon fiber bundle can be gripped by the molding material.

The long diameter $(D_1)$ of the cross section of the molding material refers to the maximum diameter in the shape of the cross section of the molding material, and the short diameter refers to the maximum diameter of the diameter in the direction perpendicular to the long diameter.

In the molding material used in the present invention, it is preferable that $100 \times (D_1/D_2)$/Wf, which is a relationship between $D_1/D_2$ and a carbon fiber content ratio Wf (carbon fiber mass fraction, unit: mass%), is 2.0 to 40.0.

The upper limit of $100 \times (D_1/D_2)$/Wf is preferably 20.0 or less, more preferably 9.0 or less, and still more preferably 8.0 or less. The lower limit of $100 \times (D_1/D_2)$/Wf is preferably 3.0 or more, and more preferably 4.0 or more.

When $100 \times (D_1/D_2)$/Wf is 40.0 or less, the carbon fiber bundle tends to fall off from the molding material. This is because a molding material having a high carbon fiber content ratio (carbon fiber mass fraction, Wf unit: mass%), of course, has a large fraction of the carbon fiber bundle, and the carbon fiber bundle tends to fall off from the molding material. In the present invention, even with a molding material having $100 \times (D_1/D_2)$/Wf within the above preferred range, the carbon fiber bundle can be gripped by the molding material.

The carbon fiber content ratio (carbon fiber mass fraction, Wf unit: mass%) is the fraction of the mass of the carbon fiber to the total mass including not only the carbon fibers and the thermoplastic resin but also the impregnation aid.

[Method for Producing Molding Material]

1. Covering

The method for producing the molding material used in the present invention is a method for producing a core-sheath-structure molding material in which a carbon fiber bundle containing an impregnation aid is covered with a thermoplastic resin, and the method preferably includes: covering the carbon fiber bundle with the thermoplastic resin to be integrated in a heated state where the carbon fiber bundle is heated to a temperature equal to or higher than a melting point of the impregnation aid when the impregnation aid is a crystalline resin, or to a temperature equal to or higher than a glass transition temperature of the impregnation aid when the impregnation aid is an amorphous resin.

This is because the voids in the carbon fiber bundle of the molding material can be reduced by heating the impregnation aid contained (sometimes solidified) in the carbon fiber bundle to a temperature higher than the melting point or glass transition temperature thereof to liquefy or soften the impregnation aid, and covering the carbon fiber bundle with the thermoplastic resin in a state where the carbon fiber bundle is easy to bundled, thereby the carbon fibers can be prevented from falling off from the molding material.

By heating the carbon fiber bundle to a temperature higher than the melting point or the glass transition temperature of the thermoplastic resin for covering the carbon fiber bundle, sudden solidification of the thermoplastic resin near the interface between the carbon fiber bundle and the thermoplastic resin is prevented, and interfacial peeling immediately after covering the carbon fiber bundle with thermoplastic resin is prevented. Thereby, the familiarity at the interface between the carbon fiber bundle and the thermoplastic resin can be improved.

In the present specification, the above step of heating the impregnation aid in advance may be referred to as "preheating" in some cases.

2. Cooling

It is preferable that the molding material used in the present invention is produced by: producing a covered body, in which the carbon fiber bundle is covered with the thermoplastic resin to be integrated; and cutting the covered body. The covered body in the present specification refers to one before being cut after the carbon fiber bundle is covered with the thermoplastic resin.

The covered body is preferably cut after being cooled to a temperature lower than the glass transition temperature of the thermoplastic resin covering the carbon fiber bundle. The present inventors consider that, by cooling and then cutting the covered body, the thermoplastic resin covering the carbon fiber bundle becomes hard to some extent from the soft state, the shear stress during the cutting concentrates, the shear stress for cutting the core carbon fiber bundle is sufficient, and the carbon fiber bundles fallen off from the covered body as if picked out from the covered body are reduced.

[Water Content Ratio in Carbon Fiber]

The assembly of molding materials according to the present invention preferably satisfies 0.001 ≤ W (w%) < 0.4 when the water content of the carbon fiber bundle containing the impregnation aid is W (wt%). The water content ratio (wt%) of the carbon fiber bundle is a ratio with respect to 100 wt% of the carbon fiber bundle, and is represented by the following Formula (4).

$$\text{(Water content ratio (wt\%) of carbon fiber bundle)} = \text{(water content (wt) contained in carbon fibers)} / \text{(weight (wt) of carbon fiber bundle containing water)} \times 100 \qquad (4)$$

If the water content ratio W of the carbon fiber bundle is small, the voids in the carbon fiber bundle of the molding material is seldom enlarged by the water evaporated and expanded in the covered body when the carbon fiber bundle is covered with the thermoplastic resin, so that it is possible to prevent the carbon fiber from falling off from the molding material. The water content ratio W (wt%) of the carbon fiber bundle is preferably less than 0.4 (wt%), and more preferably less than 0.2 (wt%).

[Application of Assembly of Molding Materials]

The assembly of molding materials according to the present invention is used as a material for injection molding. The molding material used in the present invention can be produced by a simple process and has an advantage of being able to produce an injection molded body with high production efficiency.

Examples

[Evaluation and Analysis Methods]

Examples are shown below, but the present invention is not limited thereto. Values in this example were determined according to the following methods.

(Content or Content Ratio of Surface Treatment Agent)

The carbon fiber bundle was cut at a length of 1 m, charged into a crucible. The crucible was placed in a muffle furnace set at a furnace temperature of 550°C for 15 minutes, the surface treatment agent component was burned off. The amount of the surface treatment agent such as the impregnation aid contained in the carbon fiber bundle was determined based on the mass of the remained carbon fibers.

(Fraction of Molding Material from which Carbon Fibers Fall Off (Number Fraction))

1000 molding materials were randomly taken out from the obtained assembly of molding materials. Among the 100 molding materials, the number of the molding material from which the carbon fibers fall out was counted. The number fraction of the molding material from which the carbon fibers fall off was calculated according to the following Formula (5).
Molding materials from which carbon fibers fall off (number) / 1000 (number) × 100 (5)

(Carbon Fiber Fall Off Rate (Weight Fraction) in Shaking Test)

Approximately 250 g of the assembly of molding materials produced in each example and comparative example was weighed and placed in a sieve having an opening of 2 mm and shaken for 1 minute. Next, the assembly of the molding materials from which the fibers fall off due to shaking was taken out from the sifter, the amount of the carbon fibers fell off was measured based on the weights before and after shaking, and the carbon fiber fall off rate (weight fraction) was calculated according to the following Formula (6).

Carbon fiber fall off amount (g) / assembly of weighed molding material (g) $\times$ 100 (6)

(Grip Force of Carbon Fiber Bundle to Molding Material)

100 molding materials were randomly taken out from the obtained assembly of molding materials, a pin of $\varphi 0.8$ mm was pushed into the carbon fiber bundle of the core portion of the molding material using a force gauge (manufactured by Imada) equipped with the pin at the tip, and the maximum load was measured when the carbon fibers fell off. Here, since the measurement cannot be performed when the carbon fiber bundle had already fallen off from the molding material taken out, the grip force by this molding material was set to 0 (N).

F/L (N/m) was obtained by using the average value of the grip forces by 100 molding materials taken out as F(N) and dividing this F by the pellet length L of the obtained molding material.

Next, the number of the molding material having F/L of 100 (N/m) or more was counted from the obtained 100 molding materials, and the proportion (%) of the molding material satisfying $100 \leq$ F/L of the assembly of molding materials was calculated according to the following Formula (7).

$$(\text{Number of molding material satisfying } 100 \leq \text{F/L}) / 100 \text{ (number)} \times 100 \qquad (7)$$

[Area Surrounded by Inner Periphery of Thermoplastic Resin]

100 molding materials (core-sheath structure) were randomly taken out from the obtained assembly of molding materials. A cross section cut in the axial center direction of the molding material was observed with a digital microscope (VHX-1000) manufactured by Keyence Corporation, and the area surrounded by the inner periphery of the thermoplastic resin was calculated. The average value of 100 molding materials taken out was defined as the area surrounded by the inner periphery of the thermoplastic resin (the thermoplastic resin is a sheath in the core-sheath structure). Next, the value of the following Formula (1) was calculated using the (area of carbon single fiber) and (number of single fibers in carbon fiber bundle), used in Examples and Comparative Examples of the present invention.

$$(\text{Area of Carbon single fiber}) \times (\text{number of single fibers in carbon fiber bundle}) / (\text{area surrounded by inner periphery of thermoplastic resin}) \qquad (1)$$

[Preparation of Raw Material]

The raw materials used in the present invention are as follows.

(Carbon Fiber Bundle)

PAN-based carbon fiber: STS40-24K manufactured by Toho Tenax Co.

Carbon single fiber diameter: 7.0 $\mu$m; number of filaments: 24000; tensile strength: 4000 MPa

(Impregnation Aid)

1. polycaprolactone, which is an aliphatic hydroxycarboxylic acid-based polyester, (PLACCEL (registered trademark) H1P manufactured by Daicel Corporation, molecular weight: 10000)
2. triphenyl phosphate (TPP manufactured by Daihachi Chemical Industry Co., Ltd.)
3. bisphenol A bis(diphenyl phosphate) (CR-741 manufactured by Daihachi Chemical Industry Co., Ltd.)

(Thermoplastic Resin)

Polycarbonate: L-1225Y manufactured by Teijin Ltd.

Glass transition temperature: 150°C

Linear expansion coefficient ($10^{-4}$/°C): 0.7

Solubility parameter ($(cal/cm^3)^{1/2}$): 9.7

[Example 1]

A polycaprolactone (PLACCEL (registered trademark) H1P manufactured by Daicel Corporation, molecular weight: 10000) was used as an impregnation aid, was emulsified to a nonvolatile content of 20 mass%, and a carbon fiber bundle was passed through the emulsified solution, and then the excessively adhering solution was removed from the carbon fiber bundle with a nip roll. Thereafter, the carbon fiber bundle was passed through a hot air drying oven heated to 180°C over 2 minutes to be dried, thereby a carbon fiber bundle containing the impregnation aid was obtained. Thereafter, the carbon fiber bundle was subjected again to a heat treatment by placing the carbon fiber bundle along two metal rolls, having a diameter of 60 mm and heated to 200°C, so that the water content ratio contained in the carbon fiber bundle was 0.1 wt%. The content of the impregnation aid contained in the carbon fiber bundle was 10 parts by mass based on 100 parts by mass of the carbon fibers.

Next, the carbon fiber bundle containing the impregnation aid obtained as described above was covered with a polycarbonate (L-1225Y manufactured by Teijin Ltd.) using a crosshead die for electric wire covering having an outlet diameter of 3 mm, in a state where the carbon fiber bundle was heated to 60°C by placing along two metal rolls, having a diameter of 60 mm and heated to 100°C, so as to produce a covered body. (The heating may be referred to as preheating in some cases. The phase state of the impregnation aid after the preheating was liquid.) The covered body was cooled through a water bath circulating cooling water at 20°C. At this time, the temperature of the covered body was measured using a radiation thermometer, being 120°C. Thereafter, the covered body was cut into a length of 3 mm with a pelletizer to obtain molding materials that are core-sheath pellets with a carbon fiber content ratio (Wf (carbon fiber mass fraction)) of 20 mass% (for 100 parts by mass of the carbon fibers, 394.7 parts by mass of the polycarbonate), a diameter of 3.2 mm and a length of 3 mm and suitable for injection molding.

The molding material was continuously manufactured to produce 10,000 molding materials (an assembly of molding materials). The results are shown in Table 1.

Since the linear expansion coefficient $K_1$ ($10^{-4}$/°C) of the thermoplastic resin is 0.7 and the linear expansion coefficient $K_2$ ($10^{-4}$/°C) of the impregnation aid is 1.2, $|K_1 - K_2|$ is 0.5; since the solubility parameter (SP) value $S_1$ ($(cal/cm^3)^{1/2}$) of the thermoplastic resin is 9.7 and the SP value $S_2$ ($(cal/cm^3)^{1/2}$) of the impregnation aid is 10.2, $|S_1 - S_2|$ is 0.5.

The molding material was subjected to injection molding at cylinder temperatures C1/C2/C3/C4/N = 280°C/290°C/300°C/300°C/300°C (C1 to C4 were cavities and N was a nozzle) at a molding cycle of 35 seconds using a 110 ton electric injection molding machine (J110AD) manufactured by the Japan Steel Works, LTD., to obtain a tumbling dumbbell having a thickness of 4 mm. During the molding, the carbon fibers did not fall off from the core-sheath pellets, and troubles in molding did not occur.

100 molding materials were randomly taken out from the obtained assembly of molding materials. Each molding material was cut in the direction perpendicular to the axial direction of the carbon fiber bundle of the molding material. The long diameter ($D_1$) and the short diameter ($D_2$) of each cross section of the carbon fiber bundle were measured to obtain the average value, and then $D_1/D_2$ was calculated to be 1.25. Since the carbon fiber content ratio of the molding material of Example 1 is 20 mass%, $100 \times (D_1/D_2)$/Wf is calculated to be $100 \times 1.25/20 = 1.25/0.2 \approx 6.3$.

[Example 2]

An assembly of molding materials was prepared in the same manner as in Example 1 except that the temperature of the carbon fiber bundle in preheating was changed from 60°C to 170°C. The results are shown in Table 1.

[Example 3]

An assembly of molding materials was prepared in the same manner as in Example 1 except that the carbon fiber weight fraction (wf) was changed from 20 mass% to 40 mass%. The results are shown in Table 1.

100 molding materials were randomly taken out from the obtained assembly of molding materials. Each molding material was cut in the direction perpendicular to the axial direction of the carbon fiber bundle of the molding material. The long diameter ($D_1$) and the short diameter ($D_2$) of each cross section of the carbon fiber bundle were measured to obtain the average value, and then $D_1/D_2$ was calculated to be 1.46. Since the carbon fiber content ratio of the molding material of Example 3 is 40 mass%, $100 \times (D_1/D_2)$/Wf is calculated to be $100 \times 1.46/40\% = 1.46/0.4 \approx 3.7$.

[Example 4]

An assembly of molding materials was prepared in the same manner as in Example 1 except that the length of the molding material (the length of the core-sheath pellets) was 1 mm. The results are shown in Table 1.

[Example 5]

An assembly of molding materials was prepared in the same manner as in Example 1 except that the length of the molding material (the length of the core-sheath pellets) was 10 mm. The results are shown in Table 1.

[Example 6]

Carbon fibers were coated with a thermoplastic resin in the same manner as in Example 1 except that the temperature of the cooling water was set at 80°C. The temperature of the covered body was increased from 120°C to 160°C. The results are shown in Table 1.

[Example 7]

An assembly of molding materials was prepared in the same manner as in Example 1 except that the water content ratio contained in the used carbon fiber bundle was changed from 0.1 wt% to 0.4 wt% by preparing the carbon fiber bundle without performing the heat treatment again in Example 1 (along two metal rolls having a diameter of 60 mm heated to 200°C). The results are shown in Table 1.

[Example 8]

An assembly of molding materials was prepared in the same manner as in Example 1 except that triphenyl phosphate was used rather than the polycaprolactone as the impregnation aid, and the temperature of the carbon fiber bundle in preheating was brought to 170°C. The results are shown in Table 1.

Since the solubility parameter (SP) value $S_1$ $((cal/cm^3)^{1/2})$ of the thermoplastic resin is 9.7 and the SP value $S_2$ $((cal/cm^3)^{1/2})$ of the impregnation aid is 10.5, $|S_1 - S_2|$ is 0.8.

[Example 9]

An assembly of molding materials was prepared in the same manner as in Example 1 except that bisphenol A bis(diphenyl phosphate) was used rather than the polycaprolactone as the impregnation aid, and the temperature of the carbon fiber bundle in preheating was brought to 170°C. The results are shown in Table 1.

Since the solubility parameter (SP) value $S_1$ $((cal/cm^3)^{1/2})$ of the thermoplastic resin is 9.7 and the SP value $S_2$ $((cal/cm^3)^{1/2})$ of the impregnation aid is 10.3, $|S_1 - S_2|$ is 0.6.

[Comparative Example 1]

An assembly of molding materials was prepared in the same manner as in Example 1 except that the carbon fiber bundle was not preheated when covering the carbon fiber bundle with the thermoplastic resin, and the temperature during the covering was 30°C, so as to produce a molding material with keeping the phase state of the impregnation aid in a solid state during the covering. The results are shown in Table 1.

[Comparative Example 2]

An assembly of molding materials was prepared in the same manner as in Example 1 except that the carbon fiber bundle was preheated to adjust the temperature of the carbon fiber bundle to 170°C, then the carbon fiber bundle was once cooled, and the temperature when covering the carbon fiber bundle with the thermoplastic resin was 30°C, so as to produce a molding material. The results are shown in Table 1.

The molding materials of all the examples had the same the axial length of the carbon fiber bundle and the length of the molding material. In addition, in the molding materials of all the examples, the carbon fiber bundles were not impregnated with the thermoplastic resin (when the molding material was cut in the axial center direction and was observed, the thickness of the thermoplastic resin penetrating into the carbon fiber bundle direction was 50 μm or less). In the assembly of the molding materials of all the examples, 30% or more of the molding materials in the assembly satisfy F/L (N/m) < 100,000.

[Table 1]

| | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|
| Water content ratio of carbon fiber bundle | 0.1 | 0.1 | 0.1 | 0.1 | 0.1 | 0.1 | 0.4 | 0.1 | 0.1 | 0.1 | 0.1 |
| Thermoplastic resin | PC*1 | PC | PC | PC | PC | PC | PC | PC | PC | PC | PC |
| Impregnation aid | | | | | | | | | | | |
| Type | PCL*2 | PCL | PCL | PCL | PCL | PCL | PCL | Triphenyl phosphate | Bisphenol A bis(diphenyl phosphate) | PCL | PCL |
| Melting point | 60°C | 60°C | 60°C | 60°C | 60°C | 60°C | 60°C | 50°C | 5°C | 60°C | 60°C |
| State of impregnation aid at 20°C | Solid | Solid | Solid | Solid | Solid | Solid | Solid | Solid | Liquid | Solid | Solid |
| Linear expansion coefficient ($10^{-4}$/°C) | 1.2 | 1.2 | 1.2 | 1.2 | 1.2 | 1.2 | 1.2 | | | 1.2 | 1.2 |
| Solubility parameter $((cal/cm^3)^{1/2})$ | 10.2 | 10.2 | 10.2 | 10.2 | 10.2 | 10.2 | 10.2 | 10.5 | 10.3 | 10.2 | 10.2 |
| Amount based on 100 parts by mass of carbon fibers | 10 | 10 | 10 | 10 | 10 | 10 | 10 | 10 | 10 | 10 | 10 |
| Method for producing molding material | | | | | | | | | | | |
| Preheating temperature | 60°C | 170°C | 60°C | 60°C | 60°C | 60°C | 60°C | 170°C | 170°C | | 170°C |

EP 3 536 472 B1

13

(continued)

| | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|
| Water content ratio of carbon fiber bundle | 0.1 | 0.1 | 0.1 | 0.1 | 0.1 | 0.1 | 0.4 | 0.1 | 0.1 | 0.1 | 0.1 |
| Thermoplastic resin | PC*1 | PC | PC | PC | PC | PC | PC | PC | PC | PC | PC |
| Temperature of carbon fiber bundle when being covered with thermoplastic resin | 60°C | 170°C | 60°C | 60°C | 60°C | 60°C | 60°C | 170°C | 170°C | 30°C | 30°C |
| Phase state of impregnation aid when covering carbon fiber bundle with thermoplastic resin | Liquid | Liquid | Liquid | Liquid | Liquid | Liquid | Liquid | Liquid | Liquid | Solid | Solid |
| Temperature of covered body when being cut | 120°C | 120°C | 120°C | 120°C | 120°C | 160°C | 120°C | 120°C | 120°C | 120°C | 120°C |
| Molding material Wf(wt%) | 20% | 20% | 40% | 20% | 20% | 20% | 20% | 20% | 20% | 20% | 20% |
| Length L of molding material in axial direction of carbon fiber bundle (mm) | 3 | 3 | 3 | 1 | 10 | 3 | 3 | 3 | 3 | 3 | 3 |
| Assembly of molding materials | | | | | | | | | | | |

EP 3 536 472 B1

(continued)

| | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|
| Water content ratio of carbon fiber bundle | 0.1 | 0.1 | 0.1 | 0.1 | 0.1 | 0.1 | 0.4 | 0.1 | 0.1 | 0.1 | 0.1 |
| Thermoplastic resin | PC*1 | PC | PC | PC | PC | PC | PC | PC | PC | PC | PC |
| Number fraction of molding material from which carbon fibers fall off in 1000 molding materials | 0.0% | 0.0% | 0.0% | 0.0% | 0.0% | 0.8% | 2.9% | 0.0% | 0.0% | 12.1% | 7.1% |
| Carbon fiber fall off rate | 0.0% | 0.0% | 0.0% | 0.0% | 0.0% | 0.1% | 0.5% | 0.0% | 0.0% | 1.9% | 1.1% |
| Grip force F of carbon fiber bundle by molding material | 0.76 | 2.32 | 0.71 | 0.22 | 4.95 | 0.46 | 0.27 | 1.53 | 1.68 | 0.21 | 0.23 |
| F/L (N/m) | 253 | 773 | 237 | 209 | 495 | 153 | 90 | 510 | 560 | 70 | 77 |
| Proportion of molding material satisfying $100 \leq F/L$ | 100% | 100% | 100% | 100% | 100% | 48% | 32% | 100% | 100% | 25% | 29% |
| Area of core portion of core-sheath pellets ($mm^2$) | 1.79 | 1.71 | 1.81 | 1.80 | 1.78 | 2.05 | 2.12 | 1.76 | 1.74 | 2.66 | 2.48 |

(continued)

| | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|
| Water content ratio of carbon fiber bundle | 0.1 | 0.1 | 0.1 | 0.1 | 0.1 | 0.1 | 0.4 | 0.1 | 0.1 | 0.1 | 0.1 |
| Thermoplastic resin | PC*1 | PC | PC | PC | PC | PC | PC | PC | PC | PC | PC |
| (Area of Carbon single fiber) × (number of single fibers in carbon bundle) / (area surrounded by inner periphery of thermoplastic resin (sheath)) | 0.52 | 0.54 | 0.51 | 0.51 | 0.52 | 0.45 | 0.44 | 0.52 | 0.53 | 0.35 | 0.37 |

*1 PC: abbreviation of polycarbonate
*2 PCL: abbreviation of polycaprolactone

Industrial Applicability

When the assembly of the molding materials according to the present invention is used, it is possible to prevent the carbon fibers from falling off from the molding material during injection molding and to produce a molded body with high production efficiency. In addition, when the assembly of the molding materials according to the present invention is used, troubles in molding such as clogging in a hopper dryer of a molding machine during injection molding are reduced and the handleability is excellent.

Description of Reference Numerals

201 Carbon fiber bundle
202 Inner periphery of thermoplastic resin
301 Cavity obtained after carbon fiber bundle falls off
302 Inner periphery of thermoplastic resin

**Claims**

1. An assembly of molding materials, each of which comprising:

   a carbon fiber bundle containing an impregnation aid; and
   a thermoplastic resin covering the carbon fiber bundle,
   wherein each molding material has a core-sheath structure in which the carbon fiber bundle is covered with the thermoplastic resin;
   **characterized in that** 30% or more of the molding materials in the assembly satisfy $100 \leq F/L < 10000$, wherein F/L is in units of N/m,
   wherein L represents a length of each molding material in an axial direction of the carbon fiber bundle, and F represents a grip force of the carbon fiber bundle to the molding material, wherein F is measured by:

   randomly taking 100 molding materials out from the assembly of molding materials;
   using a force gauge equipped with a pin having $\varphi 0.8$ mm at the tip thereof, pushing the pin into the carbon fiber bundle of the core portion of the molding material; and
   measuring the maximum load when the carbon fibers fall off;

   wherein each of the molding materials satisfies the following Formula when the molding material cut in an axial center direction thereof is observed:

   $$\text{Formula:} \quad 0.4 \leq (\text{area of carbon single fiber}) \times (\text{number of single fibers in carbon fiber bundle}) / (\text{area surrounded by inner periphery of thermoplastic resin});$$

   wherein, the area surrounded by the inner periphery of the thermoplastic resin is an average value of the molding materials in the assembly.

2. The assembly of molding materials according to claim 1,
   wherein an axial length of the carbon fiber bundle of each molding material is substantially the same as the length of the molding material.

3. The assembly of molding materials according to claim 2, wherein each of the molding materials satisfies the following Formula 1 when the molding material cut in an axial center direction thereof is observed:

   $$\text{Formula 1:} \quad 0.4 \leq (\text{area of carbon single fiber}) \times (\text{number of single fibers in carbon fiber bundle}) / (\text{area surrounded by inner periphery of thermoplastic resin}) \leq 0.9;$$

wherein, the area surrounded by the inner periphery of the thermoplastic resin is an average value of the molding materials in the assembly.

4.  The assembly of molding materials according to any one of claims 1 to 3, wherein the impregnation aid is one or more selected from the group consisting of a phosphate ester and an aliphatic hydroxycarboxylic acid based polyester and/or the impregnation aid is a solid substance at 20°C.

5.  The assembly of molding materials according to any one of claims 1 to 4, satisfying the following Formula 2:

$$\text{Formula 2:} \quad 0.1 < |K_1 - K_2|;$$

wherein, $K_1$, in units of $10^{-4}/°C$, represents a linear expansion coefficient of the thermoplastic resin, and $K_2$, in units of $10^{-4}/°C$, represents a linear expansion coefficient of the impregnation aid.

6.  The assembly of molding materials according to any one of claims 1 to 5, satisfying the following Formula 3:

$$\text{Formula 3:} \quad |S_1 - S_2| < 1.5;$$

wherein, $S_1$, in units of $(cal/cm^3)^{1/2}$, represents a solubility parameter value of the thermoplastic resin, and $S_2$, in units of $(cal/cm^3)^{1/2}$, represents a solubility parameter value of the impregnation aid.

7.  The assembly of molding materials according to any one of claims 1 to 6, wherein axial lengths of the carbon fiber bundles are 1 mm to 30 mm.

8.  The assembly of molding materials according to any one of claims 2 to 7, wherein the thermoplastic resin contains an amorphous resin and/or a polycarbonate.

9.  The assembly of molding materials according to any one of claims 1 to 8 wherein the carbon fiber bundles are not impregnated with the thermoplastic resin.

10. The assembly of molding materials according to any one of claims 1 to 9,

wherein the carbon fiber bundles satisfy $0.001 \le W < 0.4$,
wherein W in units of wt% is a water content ratio in the carbon fiber bundles containing the impregnation aid.

11. The assembly of molding materials according to any one of claims 1 to 10, wherein a ratio of $D_1/D_2$ is 1.1 or more and 1.8 or less,

wherein $D_1$ represents a long diameter $D_1$ of a cross section shape of the molding material cut along a direction orthogonal to the axial direction of the carbon fiber bundle, and
$D_2$ represents a short diameter $D_2$ of the cross section shape.

12. A method for producing an assembly of molding materials, each having a core-sheath-structure in which a carbon fiber bundle containing an impregnation aid is covered with a thermoplastic resin, **characterized in that** the method comprises:

covering a carbon fiber bundle with the thermoplastic resin to be integrated in a heated state where the carbon fiber bundle is heated to a temperature equal to or higher than a melting point of the impregnation aid, or heating the carbon fiber bundle to a temperature equal to or higher than a glass transition temperature of the impregnation aid;
wherein 30% or more of the molding materials in the assembly satisfy $100 \le F/L \le 10000$, wherein F/L is in units of N/m,
wherein L represents a length of the molding material in an axial direction of the carbon fiber bundle, and
F represents a grip force of the carbon fiber bundle to the molding material, wherein F is measured by:

randomly taking 100 molding materials out from the assembly of molding materials;

using a force gauge equipped with a pin having φ0.8 mm at the tip thereof, pushing the pin into the carbon fiber bundle of the core portion of the molding material; and
measuring the maximum load when the carbon fibers fall off;

wherein each of the molding materials satisfies the following Formula when the molding material cut in an axial center direction thereof is observed:

Formula: $0.4 \leq$ (area of carbon single fiber) $\times$ (number of single fibers in carbon fiber bundle) / (area surrounded by inner periphery of thermoplastic resin);

wherein, the area surrounded by the inner periphery of the thermoplastic resin is an average value of the molding materials in the assembly.

13. The method for producing the assembly of molding materials according to claim 12, wherein each of the molding materials satisfies the following Formula 1 when the molding material cut in an axial center direction thereof is observed:

Formula 1: $0.4 \leq$ (area of carbon single fiber) $\times$ (number of single fibers in carbon fiber bundle) / (area surrounded by inner periphery of thermoplastic resin) $\leq 0.9$;

wherein, the area surrounded by the inner periphery of the thermoplastic resin is an average value of the molding materials in the assembly.


**Patentansprüche**

1. Anordnung aus Formmassen, von denen jede umfasst:

ein Kohlefaserbündel, das ein Imprägnierhilfsmittel enthält; und
ein thermoplastisches Harz, welches das Kohlefaserbündel bedeckt,
wobei jede Formmasse eine Kern-Mantel-Struktur aufweist, in welcher das Kohlefaserbündel mit dem thermoplastischen Harz bedeckt ist;
**dadurch gekennzeichnet, dass** 30 % oder mehr der Formmassen in der Anordnung $100 \leq F/L \leq 10000$ erfüllen, wobei F/L in der Einheit N/m ist,
wobei L die Länge jeder Formmasse in einer axialen Richtung des Kohlefaserbündels repräsentiert, und F eine Greifkraft des Kohlefaserbündels in der Formmasse repräsentiert, wobei F gemessen wird durch:

statistisches Herausnehmen von 100 Formmassen aus der Anordnung von Formmassen;
unter Verwendung eines Kraftmessers, der mit einem Stift mit φ 0,8 mm an seiner Spritze ausgestattet ist,
Schieben des Stifts in das Kohlefaserbündel des Kernanteils der Formmasse; und
Messen der maximalen Last, wenn die Kohlefasern abfallen;
wobei jede der Formmassen die folgende Formel erfüllt,
wenn die Formmasse untersucht wird, die in einer axialen Mittenrichtung davon geschnitten wurde:

Formel: 0,4 ≤ (Fläche der Kohleeinzelfaser) x (Anzahl der Einzelfasern im Kohlefaserbündel) / (Fläche, die von innerer Peripherie des thermoplastischen Harzes umgeben ist);

wobei die Fläche, die von innerer Peripherie des thermoplastischen Harzes umgeben ist, ein Durchschnittswert der Formmassen in der Anordnung ist.

2. Anordnung aus Formmassen nach Anspruch 1, wobei eine axiale Länge des Kohlefaserbündels jeder Formmasse im Wesentlichen die gleiche wie die Länge der Formmasse ist.

3. Anordnung aus Formmassen nach Anspruch 2, wobei jede der Formmassen die folgende Formel 1 erfüllt, wenn die Formmasse untersucht wird, die in einer axialen Mittenrichtung davon geschnitten wurde:

```
Formel 1: 0,4 ≤ (Fläche der Kohleeinzelfaser) x (Anzahl
der Einzelfasern im Kohlefaserbündel) / (Fläche, die
von innerer Peripherie des thermoplastischen Harzes
umgeben ist) ≤ 0,9;
```

wobei die Fläche, die von innerer Peripherie des thermoplastischen Harzes umgeben ist, ein Durchschnittswert der Formmassen in der Anordnung ist.

4. Anordnung aus Formmassen nach einem der Ansprüche 1 bis 3, wobei das Imprägnierhilfsmittel ein oder mehrere ausgewählt aus der Gruppe bestehend aus einem Phosphatester und einem auf aliphatischer Hydroxycarbonsäure basierenden Polyester ist und/oder das Imprägnierhilfsmittel bei 20 °C eine feste Substanz ist.

5. Anordnung aus Formmassen nach einem der Ansprüche 1 bis 4, welche die folgende Formel 2 erfüllt:

$$\text{Formel 2: } 0,1 < |K_1 - K_2|;$$

wobei $K_1$ in der Einheit $10^{-4}$/°C den linearen Ausdehnungskoeffizienten des thermoplastischen Harzes repräsentiert, und $K_2$ in der Einheit $10^{-4}$/°C den linearen Ausdehnungskoeffizienten des Imprägnierhilfsmittels repräsentiert.

6. Anordnung aus Formmassen nach einem der Ansprüche 1 bis 5, welche die folgende Formel 3 erfüllt:

$$\text{Formel 3: } |S_1 - S_2| < 1,5;$$

wobei $S_1$ in der Einheit $(\text{cal/cm}^3)^{1/2}$ einen Löslichkeitsparameterwert des thermoplastischen Harzes repräsentiert, und
$S_2$ in der Einheit $(\text{cal/cm}^3)^{1/2}$ einen Löslichkeitsparameterwert des Imprägnierhilfsmittels repräsentiert.

7. Anordnung aus Formmassen nach einem der Ansprüche 1 bis 6, wobei axiale Längen der Kohlefaserbündel 1 mm bis 30 mm betragen.

8. Anordnung aus Formmassen nach einem der Ansprüche 2 bis 7, wobei das thermoplastische Harz ein amorphes Harz und/oder ein Polycarbonat enthält.

9. Anordnung aus Formmassen nach einem der Ansprüche 1 bis 8, wobei die Kohlefaserbündel nicht mit dem thermoplastischen Harz imprägniert sind.

10. Anordnung aus Formmassen nach einem der Ansprüche 1 bis 9,
wobei die Kohlefaserbündel $0,001 \leq W < 0,4$ erfüllen, wobei W in der Einheit Gew.% ein Wassergehaltverhältnis in den Kohlefaserbündeln ist, die das Imprägnierhilfsmittel enthalten.

11. Anordnung aus Formmassen nach einem der Ansprüche 1 bis 10, wobei das Verhältnis von $D_1/D_2$ 1,1 oder mehr und 1,8 oder weniger beträgt,

wobei $D_1$ einen langen Durchmesser $D_1$ einer Querschnittform der Formmasse repräsentiert, die entlang einer Richtung orthogonal zu der Axialrichtung des Kohlefaserbündels geschnitten wurde, und
$D_2$ einen kurzen Durchmesser $D_2$ der Querschnittform repräsentiert.

**12.** Verfahren zur Herstellung einer Anordnung aus Formmassen, die jeweils eine Kern-Mantel-Struktur haben, bei der ein Kohlefaserbündel, das ein Imprägnierhilfsmittel enthält, mit einem thermoplastischen Harz bedeckt wird, **dadurch gekennzeichnet, dass** das Verfahren umfasst:

Bedecken eines Kohlefaserbündels mit dem zu integrierenden thermoplastischen Harz in einem erwärmten Zustand, wobei das Kohlefaserbündel auf eine Temperatur gleich oder höher als ein Schmelzpunkt des Imprägnierhilfsmittels erwärmt wird, oder Erwärmen des Kohlefaserbündels auf eine Temperatur gleich oder höher als eine Glasübergangstemperatur des Imprägnierhilfsmittels;
wobei 30 % oder mehr der Formmassen in der Anordnung $100 \leq F/L \leq 10000$ erfüllen, wobei F/L in der Einheit N/m ist,
wobei L eine Länge der Formmasse in einer Axialrichtung des Kohlefaserbündels repräsentiert, und F eine Greifkraft des Kohlefaserbündels der Formmasse repräsentiert, wobei F gemessen wird durch:

statistisches Herausnehmen von 100 Formmassen aus der Anordnung von Formmassen;
unter Verwendung eines Kraftmessers, der mit einem Stift mit φ 0,8 mm an seiner Spritze ausgestattet ist, Schieben des Stifts in das Kohlefaserbündel des Kernanteils der Formmasse; und
Messen der maximalen Last, wenn die Kohlefasern abfallen;
wobei jede der Formmassen die folgende Formel erfüllt,
wenn die Formmasse untersucht wird, die in einer axialen Mittenrichtung davon geschnitten wurde:

```
Formel: 0,4 ≤ (Fläche der Kohleeinzelfaser) x (Anzahl
der Einzelfasern im Kohlefaserbündel) / (Fläche, die
von innerer Peripherie des thermoplastischen Harzes
umgeben ist);
```

wobei die Fläche, die von innerer Peripherie des thermoplastischen Harzes umgeben ist, ein Durchschnittswert der Formmassen in der Anordnung ist.

**13.** Verfahren zur Herstellung der Anordnung aus Formmassen nach Anspruch 12, wobei jede der Formmassen die folgende Formel 1 erfüllt, wenn die Formmasse untersucht wird, die in einer axialen Mittenrichtung davon geschnitten wurde:

```
Formel 1: 0,4 ≤ (Fläche der Kohleeinzelfaser) x (Anzahl
der Einzelfasern im Kohlefaserbündel) / (Fläche, die
von innerer Peripherie des thermoplastischen Harzes
umgeben ist) ≤ 0,9;
```

wobei die Fläche, die von innerer Peripherie des thermoplastischen Harzes umgeben ist, ein Durchschnittswert der Formmassen in der Anordnung ist.

**Revendications**

**1.** Ensemble de matériaux de moulage, chacun desquels comprenant :

un faisceau de fibres de carbone contenant un auxiliaire d'imprégnation ; et
une résine thermoplastique recouvrant le faisceau de fibres de carbone,
chaque matériau de moulage possédant une structure de type noyau-gaine dans laquelle le faisceau de fibres de carbone est recouvert avec la résine thermoplastique ;
**caractérisé en ce que** 30 % ou plus des matériaux de moulage dans l'ensemble satisfont $100 \leq F/L \leq 10\,000$, F/L étant en unités de N/m,
L représentant une longueur de chaque matériau de moulage dans une direction axiale du faisceau de fibres de carbone, et F représentant une force de préhension du faisceau de fibres de carbone au matériau de moulage, F étant mesurée:

en prenant de manière aléatoire 100 matériaux de moulage de l'ensemble de matériaux de moulage ;
en utilisant une jauge de force équipée avec une tige possédant φ0,8 mm au sommet de celle-ci, en poussant la tige dans le faisceau de fibres de carbone de la partie noyau du matériau de moulage ; et
en mesurant la charge maximale lorsque les fibres de carbone tombent ;

chacun des matériaux de moulage satisfaisant la Formule suivante lorsque le matériau de moulage coupé dans une direction centrale axiale de celui-ci est observé :

```
Formule : 0,4 ≤ (aire de fibre individuelle de carbone)
x (nombre de fibres individuelles dans le faisceau de
fibres de carbone)/(aire entourée par la périphérie
interne de la résine thermoplastique) ;
```

l'aire entourée par la périphérie interne de la résine thermoplastique étant une valeur moyenne des matériaux de moulage dans l'ensemble.

2. Ensemble de matériaux de moulage selon la revendication 1, une longueur axiale du faisceau de fibres de carbone de chaque matériau de moulage étant sensiblement la même que la longueur du matériau de moulage.

3. Ensemble de matériaux de moulage selon la revendication 2, chacun des matériaux de moulage satisfaisant la Formule suivante 1 lorsque le matériau de moulage coupé dans une direction centrale axiale de celui-ci est observé :

```
Formule 1 : 0,4 ≤ (aire de fibre individuelle de
carbone) x (nombre de fibres individuelles dans le
faisceau de fibres de carbone)/(aire entourée par la
périphérie interne de la résine thermoplastique) ≤
0,9 ;
```

l'aire entourée par la périphérie interne de la résine thermoplastique étant une valeur moyenne des matériaux de moulage dans l'ensemble.

4. Ensemble de matériaux de moulage selon l'une quelconque des revendications 1 à 3, l'auxiliaire d'imprégnation étant l'un ou plusieurs choisi(s) dans le groupe constitué par un ester de phosphate et un polyester à base d'acide hydroxycarboxylique aliphatique et/ou l'auxiliaire d'imprégnation étant une substance solide à 20 °C.

5. Ensemble de matériaux de moulage selon l'une quelconque des revendications 1 à 4, satisfaisant la Formule suivante 2 :

$$\text{Formule 2 : } 0,1 < |K_1 - K_2|;$$

$K_1$ en unités de $10^{-4}/°C$, représentant un coefficient d'expansion linéaire de la résine thermoplastique, et $K_2$, en unités de $10^{-4}/°C$, représentant un coefficient d'expansion linéaire de l'auxiliaire d'imprégnation.

6. Ensemble de matériaux de moulage selon l'une quelconque des revendications 1 à 5, satisfaisant la Formule suivante 3 :

$$\text{Formule 3 : } |S_1 - S_2| < 1,5 ;$$

$S_1$, en unités de $(cal/cm^3)^{1/2}$, représentant une valeur de paramètre de solubilité de la résine thermoplastique, et $S_2$, en unités de $(cal/cm^3)^{1/2}$, représentant une valeur de paramètre de solubilité de l'auxiliaire d'imprégnation.

**7.** Ensemble de matériaux de moulage selon l'une quelconque des revendications 1 à 6, les longueurs axiales des faisceaux de fibres de carbone étant de 1 mm à 30 mm.

**8.** Ensemble de matériaux de moulage selon l'une quelconque des revendications 2 à 7, la résine thermoplastique contenant une résine amorphe et/ou un polycarbonate.

**9.** Ensemble de matériaux de moulage selon l'une quelconque des revendications 1 à 8, les faisceaux de fibres de carbone n'étant pas imprégnés avec la résine thermoplastique.

**10.** Ensemble de matériaux de moulage selon l'une quelconque des revendications 1 à 9,

les faisceaux de fibres de carbone satisfaisant $0,001 \leq W < 0,4$,
W en unités de % en poids étant un rapport de teneur en eau dans les faisceaux de fibres de carbone contenant l'auxiliaire d'imprégnation.

**11.** Ensemble de matériaux de moulage selon l'une quelconque des revendications 1 à 10, un rapport de $D_1/D_2$ étant de 1,1 ou plus et 1,8 ou moins.

$D_1$ représentant un diamètre long $D_1$ d'une forme de section transversale du matériau de moulage coupé le long d'une direction orthogonale à la direction axiale du faisceau de fibres de carbone, et
$D_2$ représentant un diamètre court $D_2$ de la forme de section transversale.

**12.** Procédé pour la production d'un ensemble de matériaux de moulage, chacun possédant une structure de noyau-gaine dans laquelle un faisceau de fibres de carbone contenant un auxiliaire d'imprégnation est recouvert avec une résine thermoplastique, **caractérisé en ce que** le procédé comprend :

le recouvrement d'un faisceau de fibres de carbone avec la résine thermoplastique devant être intégrée dans un état chauffé où le faisceau de fibres de carbone est chauffé à une température égale ou supérieure à un point de fusion de l'auxiliaire d'imprégnation, ou le chauffage du faisceau de fibres de carbone à une température égale ou supérieure à une température de transition vitreuse de l'auxiliaire imprégnation ;
30 % ou plus des matériaux de moulage dans l'ensemble satisfaisant $100 \leq F/L \leq 10\ 000$, F/L étant en unités de N/m,
L représentant une longueur de chaque matériau de moulage dans une direction axiale du faisceau de fibres de carbone, et
F représentant une force de préhension du faisceau de fibres de carbone au matériau de moulage, F étant mesurée:

en prenant de manière aléatoire 100 matériaux de moulage de l'ensemble de matériaux de moulage ;
en utilisant une jauge de force équipée d'une tige possédant φ0,8 mm au sommet de celle-ci, en poussant la tige dans le faisceau de fibres de carbone de la partie noyau du matériau de moulage ; et
en mesurant la charge maximale lorsque les fibres de carbone tombent ;

chacun des matériaux de moulage satisfaisant la Formule suivante lorsque le matériau de moulage coupé dans une direction centrale axiale de celui-ci est observé :

```
Formule : 0,4 ≤ (aire de fibre individuelle de carbone)
x (nombre de fibres individuelles dans le faisceau de
fibres)/(aire entourée par la périphérie interne de la
résine thermoplastique) ;
```

l'aire entourée par la périphérie interne de la résine thermoplastique étant une valeur moyenne des matériaux de moulage dans l'ensemble.

**13.** Procédé pour la production de l'ensemble de matériaux de moulage selon la revendication 12, chacun des matériaux de moulage satisfaisant la Formule suivante 1 lorsque le matériau de moulage coupé dans une direction centrale axiale de celui-ci est observé :

Formule 1 : 0,4 ≤ (aire de fibre individuelle de carbone) x (nombre de fibres individuelles dans le faisceau de fibres de carbone)/(aire entourée par la périphérie interne de la résine thermoplastique) ≤ 0,9 ;

l'aire entourée par la périphérie interne de la résine thermoplastique étant une valeur moyenne des matériaux de moulage dans l'ensemble.

FIG. 1

FIG. 2

FIG. 3

FIG. 4

**EP 3 536 472 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013137246 A
- JP 2014159560 A
- US 2014106166 A1
- EP 1105277 A1
- EP 2725055 A1
- JP 2012056232 A
- WO 2013137246 A1
- WO 2016021479 A1
- US 2002019182 A1